# EUROPEAN PATENT SPECIFICATION

(11) **EP 3 316 262 B1**
(45) Date of publication and mention of the grant of the patent: **17.02.2021**
(21) Application number: 16814796.5
(22) Date of filing: 10.06.2016
(51) Int. Cl.: G21C 7/36, G05B 9/03

(54) **SAFETY CONTROL SYSTEM FOR A NUCLEAR POWER PLANT**
SICHERHEITSSTEUERUNGSSYSTEM FÜR EIN KERNKRAFTWERK
SYSTÈME DE COMMANDE DE SÉCURITÉ D'UNE CENTRALE NUCLÉAIRE

(30) Priority: 25.06.2015 RU 2015125044
(43) Date of publication of application: 02.05.2018
(73) Proprietor: Federal State Unitary Enterprise "All - Russian Research Institute Of Automatics", Moscow 127055 (RU)
(72) Inventor: KISHKIN, Vladimir L'vovich, Moscow 115172 (RU); NARITS, Aleksandr Dmitrievich, Moscow 109451 (RU); MOISEEV, Mikhail Ivanovich, Moscow 129090 (RU); NOVIKOV, Aleksey Ivanovich, Moscow 115280 (RU); KARPOV, Petr Sergeevich, Moscow 127543 (RU); TIMOKHIN, Dmitriy Sergeevich, Moscow 117513 (RU); GRITSENKO, Stanislav Yur'evich, Moscow 125239 (RU); MEYLAKHS, Artem L'vovich, Moscow 121351 (RU); NOVIKOV, Aleksandr Aleksandrovich, Moscow 125480 (RU)
(74) Representative: Friese Goeden Patentanwälte PartGmbB
(86) International application number: PCT/RU2016/000357
(87) International publication number: WO 2016/209115

(56) References cited:
- WO-A2-2014/031039
- CA-A1- 2 304 438
- CN-U- 203 759 492
- KR-B1- 100 265 321
- KR-B1- 101 244 015
- RU-C2- 2 356 111
- US-A1- 2011 313 580

## Description

The invention relates to automatics and computer engineering, and can be used in I&C systems of nuclear power plants (NPP) for constructing control safety systems (CSS) of NPP.

A digital plant protection system is known (U.S. Patent No. 6049578, IPC G21C 7/36, published on April 11, 2000, analog), which consists of four identical processing & control channels that provide detection of a trip condition at a facility by means of comparison of measured parameter values with predetermined setpoints and execution of user-specified remedial actions in case the parameters are out-of-specification. Safety channels, physically separated from one another, are cross-connected with each other by optical fiber communication paths. Each channel includes analog and digital sensors associated with this channel; analog-to-digital converters that provide at the output digital representation of the measured analog signals; a bistable processor; a coincidence logic processor, and a logic processor initiating actuation mechanisms (AM) and automatic safety features of a reactor. The bistable processor accepts digital values of measured signals of its own channel, convert them into the process-dependent parameters, checks measured parameters for deviation beyond the predetermined limits, generates for each parameter a binary sign of deviation, transmits these signs via optical fiber lines to other processing & control channels. The coincidence logic processor receives from the bistable processor of its channel the binary signs of parameters deviation for the signals of this channel, and receives via optical fiber lines from the other channels the binary signs of deviation for the respective parameters. For every parameter the coincidence logic processor checks receipt of signs of beyond-limit deviation of 2 out of 4 channels. If the coincidence processor detects deviation from the permissible values of the parameters for 2 out of 4 channels, then initiation logic processor generates needed commands for reactor trip and for actuation of digital safety features. Another redundant communication system for a nuclear plant is known from WO 98/57238. The analog has the following disadvantages.

Data exchange between channels via optical fiber communication lines and data processing based on '2 out of 4' redundant majority principle are executed only at the initial stage of acquisition and processing of input signals of the process sensors. This reduces reliability of the protection system and can cause generation of false protection & control commands in safety channels due to failures in logic of processing and AM control initiation.

Applied software of the system is distributed between several processors executing individual protection tasks. This degrades reliability, complicates application programs of protection, and makes difficult the development of applied software using computer-aided methods that allow program errors leading to common cause failures in all channels of the protection system to be excluded at the level of applied algorithms.

There are individual control instrumentation and test panels in each channel of the four-channel protection system, but there is no hardware and software means that provide remote manual control of protective actions from the main control room and emergency control room.

There is also no means of communication with the normal operation system for transmission of diagnostic information about execution of protection functions and about protection system equipment state of health to the upper control level.

A digital control safety system (DCSS) of nuclear power plant together with a method of safety parameters provision is known (RU patent No. 2356111, IPC G21C7/36, published in 2009, prototype), which consists of three separate identical safety channels executing evaluation of a facility state by means of the analysis of the parameter values received from the process sensors, and generating control protective actions in case of emergency situation. Physically separated safety channels are cross-connected with each other by optical fiber communication paths. Each channel includes an input device, comparator, control action generating device, lockout selection device, and actuation mechanisms control device. The input device executes input of analog signals of the process and their conversion into digital form. The comparator compares read out parameter values with pre-determined digital values and starts the device generating control signals, based on which the lockout selection device initiates generation of actuation mechanism control signals.

The prototype has the following disadvantages.

The applied program in the DCSS channel is distributed between several digital processing devices, which degrades reliability and makes difficult computer-aided development of applied software allowing common cause failure to be excluded.

In the DCSS every digital processing device of the safety channel is cross-connected by interchannel optical fiber communication paths with each respective device in other channels, forming 4 levels of interchannel links and majority redundancy of safety channel devices. This redundancy based on the majority principle of equipment of each of several processing & control devices is inefficient since this equipment is a minor part of all the channel equipment, and therefore its majority redundancy does not lead to an essential enhancement of the control safety system reliability, but at the same time it requires considerable hardware inputs for interchannel links. There is also no monitoring of control signals sent to AM.

The prototype has wire lines of communication of actuation mechanism control devices with the main control room (MCR) and emergency control room (ECR) that are insufficient for receiving full information about the state of AM, AM control devices, and applied algorithms of the processing & control devices, which is necessary for fault locating and DCSS restoration.

In the DCSS, there is also no means of communication with the normal operation system necessary for transmission of diagnostic information about execution of protection functions and safety equipment state to the upper level of the normal operation system.

This invention eliminates mentioned disadvantages.

Technical result of the invention is as follows:
- improvement of multichannel control safety system (CSS) reliability by means of using in every safety channel of a single processor for solving all the tasks of NPP state analysis and protection control,
- exclusion of common cause failure due to encapsulated errors in software owing to the possibility of developing the entire applied software using computer-aided methods in software environment of a single processor,
- enhancement of majority redundancy efficiency owing to the reduction of a number of digital processing devices to a single processor, and consequently reduction of levels of interchannel exchange and majority redundancy of those devices,
- elimination of false commands sent to actuation devices due to failure of signal input devices and a processing device owing to the two-level majority redundancy,
- extension of remote control and diagnosing functions due to introduction of data communication of every channel processor with the normal operation system and the main control room and emergency control room of the CSS,
- reduction of restoring time and enhancement of the CSS availability due to use of fault-tolerant and diagnosed I/O bus that is built based on communications modules and duplex 'point-to-point'-type interfaces in the form of a tree-type structure.

Technical result is achieved by the fact that in the digital control safety system of a nuclear plant that contains multiple identical safety channels, each channel includes process signal I/O stations IOS₁₋ₙ, actuation mechanism priority control stations PCS₁₋ₘ connected with the main control room MCR and emergency control room ECR, safety features automation controller (SF AC), safety feature I/O bus SF IOB for data exchange between SF AC controller and IOS/PCS stations, and is cross-connected with other safety channels by means of duplex optical fiber communication paths; the IOS station contains modules of communication with the process MCP₁₋ₖ and communication module - converter of communication interfaces CIC of SF IOB bus; the PCS station contains actuation mechanism priority control modules PCM₁₋ₑ and communication modules: voting communication module VCM and voting module VM of SF IOB bus; the automation controller SF AC contains safety feature automation processor module SF APM and communication modules - branching modules BM-4₁₋ₚ of SF IOB bus; safety feature automation processor module SF APM of every safety channel is connected with SF APM of the other safety channels by means of cross-connected links implemented based on interprocessor interfaces IPI of 'point-to-point' type built based on Ethernet interface and specific data-level communication protocol. SF IOB bus of a safety channel has a tree-type structure, the upper root node of which is SF APM of the safety channel, and the low end nodes are modules of communication with the process MCP₁₋ₖ of IOS₁₋ₙ stations and priority control modules PCM₁₋ₑ of PCS₁₋ₘ stations of its own safety channel, and priority control modules PCM₁₋ₑ of PCS₁₋ₘ stations of other safety channels; and intermediate nodes are communication modules: BM-4₁₋ₚ of automation controller, CIC of I/O stations, and VCM and VM of the priority control stations; links between the modules being in the nodes of the SF IOB bus are implemented as the lines of serial duplex 'point-to-point'-type interface; interchannel links between automation controller SF AC of each safety channel and priority control stations PCS₁₋ₘ of other safety channels are implemented using fiber optic cables. Each safety channel is implemented using a single processor located in the automation processor module APM; and the majority redundancy according to the algorithm of choosing commands and data '2 out of N', where N is a number of safety channels, is implemented here at the two levels of interchannel communiations: at the level of the processors of SF APM modules, when the processor of the SF APM module of each safety channel receives commands and measured parameters from the processors of the SF APM modules of other safety channels via interprocessor interfaces IPI, and at the level of the priority control stations in communication modules VM of PCS₁₋ₘ stations, when control commands come to PCS₁₋ₘ stations from the processors of the SF APM modules of all safety channels via the SF IOB buses. In the PCM modules of PCS stations the output of the programmable logic circuit PLC of the actuation mechanism priority control logic PCL - (PCL PLC) is connected to the AM and via feedback links to SF AC controller of the safety channel via safety feature programmable logic circuits (SF PLC) and SF IOB bus. SF AC controllers of the safety channels are connected with the MCR and ECR via interprocessor interfaces IPI of 'point-to-point' type implemented based on Ethernet interface and specific data-level communication protocol. Automation controllers SF AC of all safety channels are connected to the normal operation system via redundant bus EN built based on switched Ethernet interface, ring structure of net switch connection, and specific data-level communication protocol. In IOS station of every safety channel, communication module CIC of the SF IOB bus is connected via separate SF IOB communication lines with the automation controller SF AC of the safety channel and with each module MCP₁₋ₖ. In each safety channel, PCS stations are combined into groups of N stations; the number of PCS stations is determined by the number of safety channels; the first station of the group PCS₁ is connected by the SF IOB communication line with SF AC controller of its safety channel; the other stations PCS_{2-N} of the group are connected with SF AC controllers of other safety channels N-1; communication module VCM of each PCS station is connected with the communication module of voting according to '2 out of 4' majority principle VM of its own PCS station and communication modules VM of the other PCS stations of the group; communication module VM of each PCS station is connected via SF IOB communication lines with the priority control modules PCM₁₋ₑ of this station.

SF IOB bus has two groups of communication lines of 'point-to-point' type: lines of downstream data and commands from SF APM processor module to MCP input/output modules and priority control modules PCM, and upstream data lines from MCP and PCM modules to SF APM processor module. For downstream data each communication module implements branching of data, coming via one of the 'tree' lines from the upper bus node, to several communication lines to the low bus nodes; and for the upstream data it implements concentration of data, coming to the module via several lines of the 'tree' from low bus nodes, to the communication line of the module to the upper bus nodes. Downstream command transmission rate is set to be constant for all branches of the I/O bus; and for the upstream data the rate increases from low branches of the I/O bus 'tree' to the upper ones in order to exclude data loss due to data overrun in communication lines of the bus. In the communication modules of the bus, a buffer memory of FIFO type is also installed for the upstream data, which provides damping of local short-time overloads in the bus that could occur in case of safety system equipment failure. Voting communication modules VM (voting modules) in the priority control stations PCS execute also majority processing according to '2 out of N' principle of downstream commands and data from all safety channels at the second level of interchannel communications and majority redundancy.

Said arrangement of the I/O bus excludes multiple errors of bus agents (MCP and PCM modules) due to a single failure of communications in one of them, which complicate locating of communication failure in bus agents. A fault of a bus agent causing failure of communications with it via the I/O bus does not affect communications via the bus with another agent since there is no common data transmission medium at the level of the agent connection to the SF IOB bus typical for backbone buses. Faults of communication modules can disturb operation of several MCP and PCM modules in the bus, but such faults in the I/O bus of a 'tree'-type structure can be traced to the level of a substitute item (communication module) based on data about errors of agents connected to the bus. In addition, probability of fault occurrence in the communication modules of SF IOB bus is considerably lower than in MCP and PCM modules.

Capability to trace faults up to substitution modules, i.e. communication modules, in branching bus SF IOB ensures minimal CSS recovery time and its high availability.

Combining of PCS stations into groups reduces a number of interchannel links via SF IOB bus from N-1 (N is number of safety channels) to a single one per each PCS station.

At the first level of interchannel communications the majority redundancy of equipment of IOS stations and SF AC automation controllers (SF APM modules and equipment of SF APM communication with IOS stations via SF IOB bus) of safety channels is implemented, i.e. in case of failure of the IOS equipment, processor module SF APM, and equipment of its communication with the IOS via SF IOB bus in any (N-2) safety channels, the rest part of equipment in all safety channels remains functional.

At the second level of the interchannel communications, reception of commands from SF APM modules of all safety channels and their majority processing according to '2 out of N' principle are implemented in communication module VM of the priority control station immediately before transmitting the commands generated according to the said principle via the internal lines of the SF IOB bus of PCS station to hardware priority control logic of IPI modules. At this level of interchannel communications a majority redundancy is provided for the equipment of SF APM communication with PCS stations via SF IOB bus of the channels, i.e. in case of failure of the equipment of SF APM communication with PCS via SF IOB bus of any (N-2) channels the PCS stations of all safety channels remain functional.

The two-level structure of interchannel data exchange and application of a single processor for solving all the tasks of the protection logic ensure high reliability of multichannel CSS, and exclude generation of false commands for priority control stations due to failures in IOS stations, SF APM processor, and SF IOB bus, with less hardware expenditure for interchannel communications as compared to the four-level structure of the prototype. The CSS operability is kept on the whole in case of a combination of above mentioned failures provided that PCS stations are operable at least in one safety channel.

Unified single processor software medium for all safety tasks ensures the development of CSS applied software using computer-aided methods that exclude encapsulated errors in the applied software programs leading to common cause failure of all the safety channels.

SFAC controller, upon transmission of AM initiating command to PCM module via SF IOB bus, executes control of the command sent to the AM, reading it via feedback link from PCL PLC output and comparing it with the issued command. If the command does not correspond to the issued command, then SF AC registers failure of the PCM module and reports of this sending message via EN bus to the upper level of the normal operation system control, and via interfaces IPI₁ to the MCR and IPI₂ to ECR. This provides fault localization in AM control circuit up to substitution modules, i.e. PCM modules, and minimal functioning recovery time by means of replacing PCM modules.

Additional links of SF AC with the MCR and ECR, respectively, via IPI₁ and IPI₂ interfaces extend functions of the CSS channels diagnosing from the side of the MCR and ECR providing transmission by SF AC controller to MCR and ECR of detailed diagnostic data about the state of priority control logic and actuation mechanisms coming to SF AC via input/output bus from the priority control modules, and transmission to the MCR and ECR of data about the progress of protection algorithms execution in SF AC.

SF AC communication with the normal operation system via EN bus additionally extends capabilities of the CSS diagnostics from the upper control level.

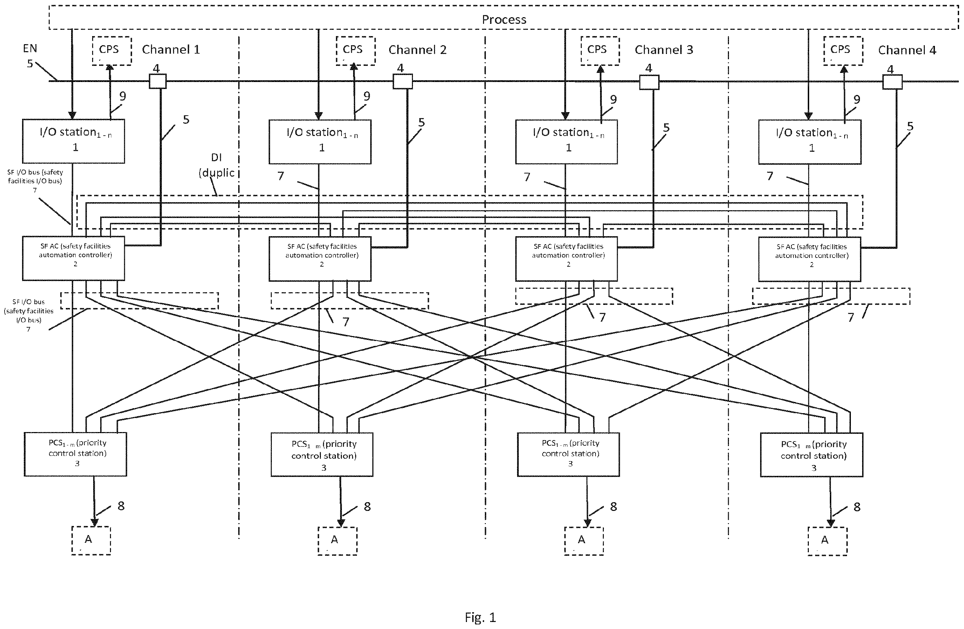

The matter of the invention is elucidated in Figures 1 - 7.

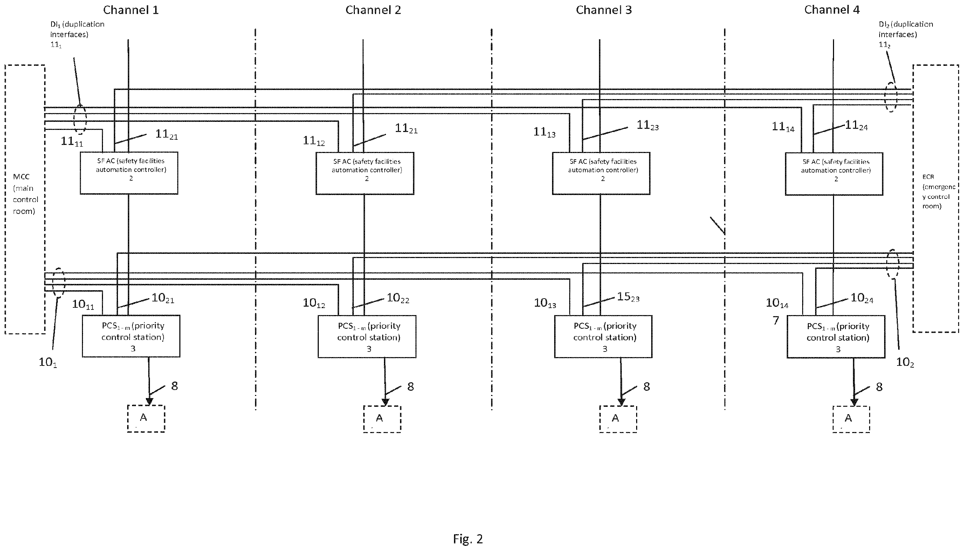

Figures 1 and 2 show block diagram of the four-channel control safety system CSS structure, where: *1* are I/O stations IOS₁₋ₙ, n is a number of IOS stations in one CSS channel; *2* is safety system automation controller SF AC; 3 are priority control stations PCS₁₋ₘ, m is a number of PCS stations in one CSS channel; *4* are net switches of EN bus; 5 is redundant bus EN of normal operation; *6* is interprocessor interface IPI of communication of each safety channel SF AC controllers with SF AC of other safety channels; *7* is a safety I/O bus SF IOB; *8* are actuation mechanism control signals; *9* are control signals for control and protection system CPS; *10*₁ are wire lines of communication of PCS stations of each CSS channel with the MCR; *10*₂ are wire lines of communication of PCS stations of each CSS channel with the ECR; *11*₁ are interprocessor interfaces IPI₁ of each safety channel SF AC controllers communication with the MCR; *11*₂ are interprocessor interfaces IPI₂ of each safety channel SF AC controllers communication with the ECR.

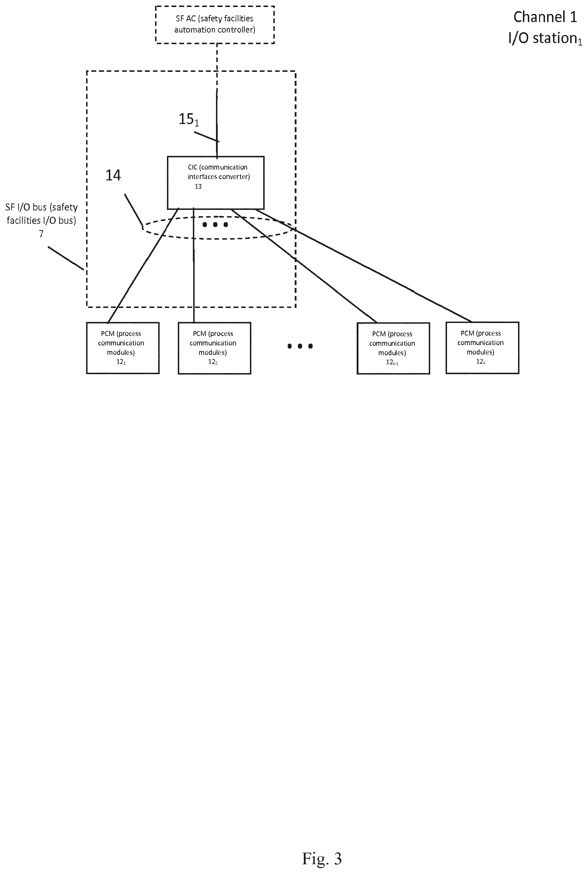

Figure 3 shows block diagram of I/O station IOS (using the example of IOS₁ station of channel 1), where: *7* is a segment of I/O bus SF IOB; *12*₁ - *12*ₖ are modules of communication with the process MCP, k is a number of MCP modules in IOS station; *13* is communication module CIC; *14* are lines of CIC module *13* communication with MCP modules *12*₁ - *12*ₖ via SF IOB bus *7*; *15*₁ is communication line of CIC module *14* of IOS₁ station with automation controller SF AC via SF IOB bus *7.*

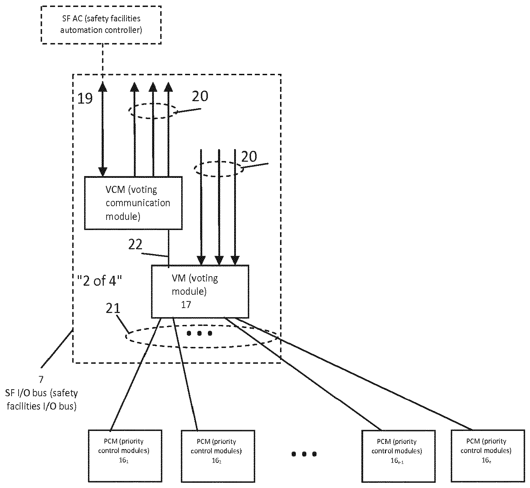

Figure 4 shows variant of a priority control station PCS block diagram (using the example of PCS station being part of a group of 4 stations connected with SF AC of each of the 4 channels via one line of the SF IOB), where: *7* is a segment of I/O bus SF IOB; *16*₁ *-* 16*ₑ* are priority control modules PCM, *e* is a number of PCM modules in PCS station; *17* is communication module of voting according to algorithm '2 out of 4' VM; *18* is communication module VCM; *19* is a line of communication of VCM *18* with SF AC controller of its own or other safety channel via SF IOB bus *7*; *20* are interstation lines of communication of VCM (VM) modules of PCS station of the group with VM (VCM) modules of the other 3 stations of the group via SF IOB bus; *21* are lines of communication of VM module *17* via SF IOB bus *7* with PCM modules *16*₁ - *16*ₑ; 22 is a line of communication of VCM module with VM module in PCS station.

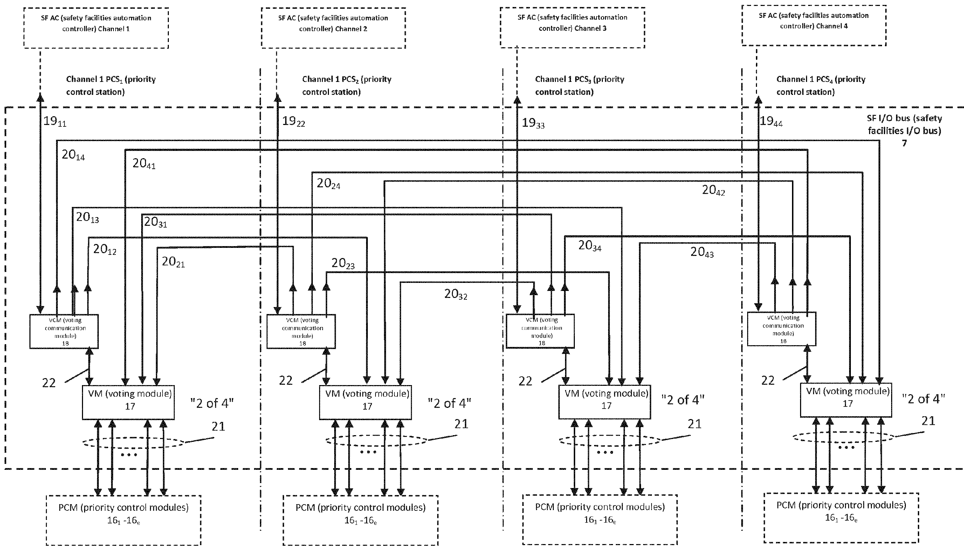

Figure 5 shows the structure of links via SF IOB bus of a group of 4 stations PCS₁₋₄ of safety channel 1 with their own controller SF AC and with controllers SF AC of the other 3 safety channels, where: *7* is a segment of SF IOB bus; *17* is voting communication module VM; *18* is communication module VCM; *19* (*19*₁₁, *19*₂₂, *19*₃₃, *19*₄₄) are communication lines via SF IOB bus of VCM modules of the group of stations of channel 1 with SF AC controllers of their own channel (channel 1) and of 3 other safety channels; *20* (*20*₁₂, *20*₁₃*, 20*₁₄*, 20*₂₁*, 20*₂₃*, 20*₂₄*, 20*₃₁, *20*₃₂, *20*₃₄*, 20*₄₁, *20*₄₂, *20*₄₃) are interstation lines of communication of VCM module of each PCS₁₋₄ station with VM modules of the other 3 stations of the group via SF IOB bus; *21* are communication lines of VM module *17* via SF IOB bus 7 with PCM modules *16*₁ - *16*ₑ; *22* is a line of communication of VCM module with VM module in PCS station.

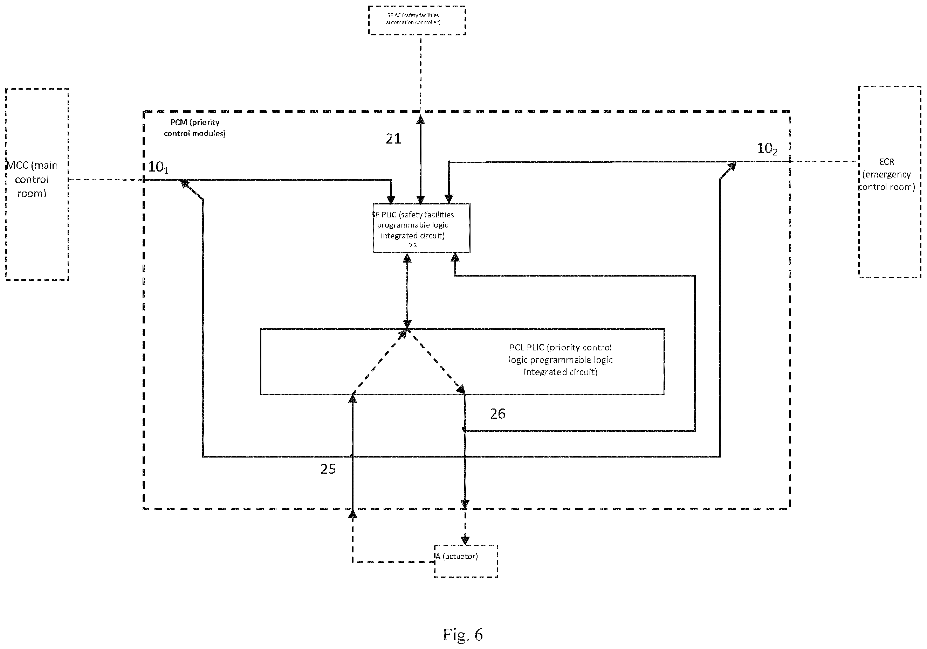

Figure 6 provides block diagram of priority control module PCM, where: *10*₁ are wire lines of AM remote control from the MCR; *10*₂ are wire lines of AM remote control from the ECR; *21* is communication line of SF IOB bus; *23* is programmable logic circuit SF PLC; *24* is programmable logic circuit of priority control logic PCL PLC; *25* is AM state inputs line; *26* is a feedback link for interrogation of a state of control command transmitted to AM.

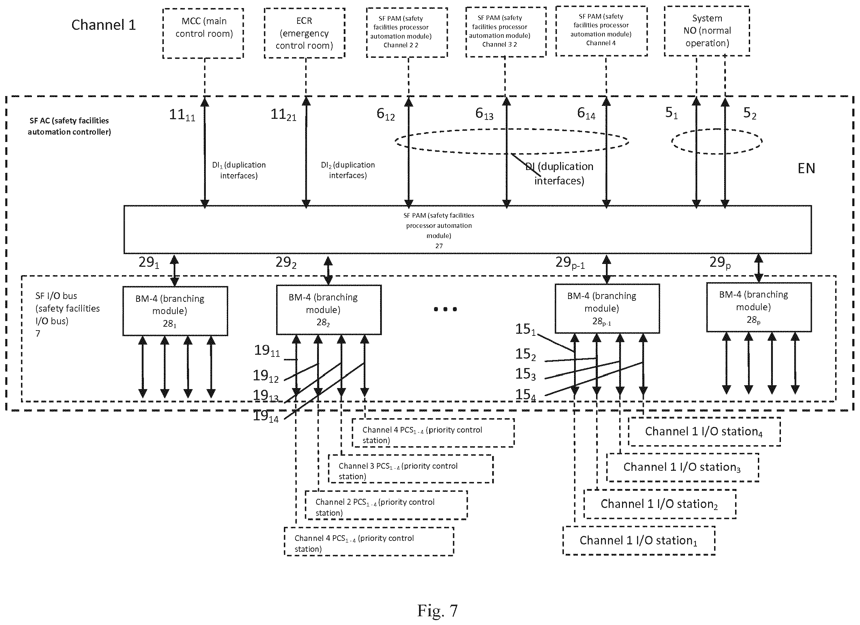

Figure 7 shows block diagram of SF AC automation controller (using the example of channel 1 SF AC), where: *5*₁, *5*₂ is redundant bus EN of normal operation; *6*₁₂, *6*₁₃, *6*₁₄ are interprocessor interfaces IPI of channel 1 SF AC communication with SF AC of channels 2, 3, 4; *7* is a segment of SF IOB bus; *11*₁₁, *11*₂₁ are communication interfaces of automation processor SF APM 27 of channel 1 via interfaces IPI₁, IPI₂, respectively, with MCR and ECR; *15*₁, *15*₂, *15*₃, *15*₄ are communication links of communication module BM-4 *28*ₚ₋₁, respectively, with IOS₁, IOS₂, IOS₃, IOS₄ stations of channel 1 via SF IOB bus; *19*₁₁, *19*₁₂, *19*₁₃, *19*₁₄ are communication lines of BM-4 module *28*₂ with PCS₁₋₄ stations of channels 1, 2, 3, 4 via SF IOB bus; 27 is a processor module of automation SF APM; *28*₁ - *28*ₚ are communication modules BM-4; *29*₁₋ₚ are links of SF APM with BM-4 communication modules.

CSS software & hardware complex, schematically represented in Figures 1 and 2 using the example of 4-channel control safety system CSS, operates in the following way.

I/O stations IOS₁₋ₙ of each safety channel receive analog and binary signals of the process, convert them into digital form, and transmit via safety I/O bus SF IOB 7 to safety channel automation controller SF AC 2. Following commands of SF AC 2, IOS stations also generate and send CPS control signals *9.*

SF AC controller 2 converts received digital values of analog and binary signals into process parameters, transmits them via interprocessor interface IPI *6* to automation controllers SF AC 2 of other safety channels, receives process parameters from these safety channels, and executes software-based selection of parameters for further processing according to majority principle '2 out of 4' at the first level of interchannel communications and majority redundancy. Automation controller SF AC 2 compares process parameters, selected according to the majority algorithm, with the predetermined limits of nuclear power plant safe operation. Further processing of the received process parameters is executed at several stages of implementation of protection algorithms, including intermediate conversion of the results of processing, interchannel communications via IPI interfaces *6,* and majority processing at every stage.

If SF AC controller 2 detects an emergency situation as a result of analysis of input process parameters, it generates and sends via SF IOB bus *7* commands initiating protective actions to the priority control stations PCS₁₋ₘ *3* of its own safety channel and to PCS stations *3* of other safety channels at the second level of interchannel communications. If the emergency situation requires reactor trip, then SF AC *2* sends via SF IOB bus *7* to IOS station *3* control command for CPS.

Automation controller SF AC *2* in the process of operation generates and sends to the upper level of the normal operation system via redundant bus of normal operation EN *5* diagnostic information about the state of SF AC and IOS/PCS stations. Reception of information in SF AC *2* via EN bus from the normal operation system is blocked.

Priority control stations PCS₁₋ₘ *3* receive actuation mechanism control commands from SF AC controller 2 of their own channel and from SF AC 2 of the other safety channels, and execute their hardware-based processing according to redundancy principle '2 out of 4' at the second level of interchannel communications.

PCS₁₋ₘ stations 3, based on the commands selected according to majority principle '2 out of 4', generate control signals for actuation mechanisms AM *8.* Control commands for AM *8* come to actuation mechanisms. Feedback links are additionally introduced into the priority control circuits of PCS₁₋ₘ stations; via these links SF AC *2* reads commands sent to AM *8* and checks whether they correspond to the preset commands. Stations PCS₁₋ₘ receive signals of AM *8* state for evaluation of AM *8* response to the control commands.

PCS₁₋ₘ stations *3* of the safety channel receive also control commands from other control centers: main control room MCR, emergency control room ECR, and generate control signals for AM *8* according to priorities of the control centers.

According to Figure 2 the MCR and ECR are connected directly to PCS₁₋ₘ stations 3 of each safety channel via wire lines, and to SF AC controllers 2 via communication lines of interfaces IPI₁ *11*₁, IPI₂ *11*₂ of Ethernet 'point-to-point'-type interface with specific data-level communications protocol.

Via wire communication lines *10*₁, *10*₂, from MCR and ECR to PCS₁₋ₘ *3* binary control signals are transmitted, and from PCS₁₋ₘ *3* to MCR and ECR signals reflecting the state of priority control stations and AM *8* are transmitted to be displayed on safety panels.

Via communication lines of interfaces IPI₁ *11*₁, IPI₂ *11*₂, from SF AC controller 2 of safety channels to MCR and ECR diagnostic information about execution of protection algorithms and extended diagnostic information about the state of actuation mechanisms and priority control modules is transmitted.

IOS station, which structure is shown in Figure 3 using the example of IOS₁ station of channel 1, contains: communication module CIC *13* of SF IOB bus *7*, modules of communication with the process MCP *12*₁ - *12*ₖ. CIC module is connected via separate communication lines of SF IOB *14* of 'point-to-point' type of serial duplex interface with each MCP module *12*₁ - *12*ₖ, and via communication line of SF IOB bus *15*₁ - with automation controller SF AC.

Communication module CIC *13* distributes commands and data coming via line *15*₁ from SF AC controller 2, to lines *14* of communication with MCP modules, and concentrates data coming via lines *14* from MCP modules to line *15*₁ of IOS station communication with SF AC. Via communication line *15*₁ an access to each MCP module of I/O station from the side of SF AC is implemented for data transmission and reception.

Modules of communication with the process MCP *12*₁ - *12*ₖ execute reception and reproduction of analog and binary signals of the process, conversion of input signals of the process into digital form and digital values of output signals into analog form, preprocessing of input signals, communication with SF AC controller via communication lines *14, 15*₁ of SF IOB bus *7.*

Figure 4 shows the structure of a priority control station PCS using the example of PCS station of channel 1 being part of a group of 4 stations PCS₁₋₄, with which automation controller SF AC of each channel implements data exchange via one communication line of SF IOB bus. IOS station contains: communication module VCM *18,* voting communication module VM *17,* priority control modules PCM *16*₁ - *16*ₑ. VM module is connected: via individual branching lines *21* of SF IOB 7 of 'point-to-point' type of serial duplex interface with each PCM module *16*₁ - *16*ₑ; via 3 concentration lines 20 of SF IOB bus *7* with communication modules VCM of the other 3 stations PCS.

Communication module VM *17* implements functions of branching downstream commands and data from SF AC to PCM modules *16*₁ - *16*ₑ, and concentrating upstream data from PCM modules *16*₁ - *16*ₑ to SF AC, and functions of hardware-based majority selection of downstream commands and data from 4 safety channels received via communication lines *22*, *20* of SF IOB *7* according to majority processing algorithm '2 out of 4' for transmission to PCM modules *16*₁ - *16*ₑ.

Communication module VCM *18* is linked: via line 22 of SF IOB with VM communication module *17* of its PCS station; via 3 branching lines *20* of SF IOB - with VM communication modules of the other 3 stations of safety channel 1; via concentration line *19* of SF IOB *7* in PCS₁ station - with SF AC of its own safety channel 1, via concentration line *19* of SF IOB *7* in 3 other PCS stations - with SF AC of the other 3 safety channels.

Figure 5 shows structure of links via SF IOB bus of a group of 4 stations PCS₁₋₄ of safety channel 1 with SF AC controller of this safety channel and with SF AC controllers of the other 3 safety channels. VCM module *18* of PCS₁ station via communication line *19*₁₁ is connected with SF AC controller of its channel 1, VCM module *18* of PCS₂ station via communication line *19*₂₂ is connected with SF AC controller of channel 2, VCM module *18* of PCS₃ station via communication line *19*₃₃ is connected with SF AC controller of channel 3, VCM module *18* of PCS₄ station via communication line *19*₄₄ is connected with SF AC controller of channel 4. VCM module *18* in each PCS₁₋₄ station is linked with VM modules of the other 3 PCS stations of the group: via branching lines *20*₁₂, *20*₁₃, *20*₁₄ in PCS₁ station, via branching lines *20*₂₁, *20*₂₃, *20*₂₄ in PCS₂ station, via branching lines 20₃₁, 20₃₂, 20₃₄ in PCS₃ station, via branching lines *20*₄₁, *20*₄₂, *20*₄₃ in PCS₄ station.

Via said links of SF IOB bus commands and data from SF AC controller of each of the 4 channels come to VM modules of each station of the group for execution of majority processing according to '2 out of 4' principle and for transmission of the selected commands and data via branching lines of VM modules *17* to PCM modules.

Figure 6 shows block diagram of priority control module PCM. PCM module executes control of AM following initiating commands from several control centers: from SF AC controller via communication line *21* of SF IOB bus; from MCR via wire lines *10*₁, and from ECR via wire lines *10*₂*.* Transmission of AM state is implemented via links *21*, *21*₁, *21*₂, respectively, to SF AC, MCR, and ECR. Transmission of PCM module state to SF AC is implemented via SF IOB bus *27.*

Control commands for AM are generated following initiating commands from SF AC, MCR, and ECR in programmable logic circuit SF PLC *23.* AM control commands from SF PLC *23* come to PLC of priority control logic - PCL PLC *24,* where a command to be sent to AM according to the priorities of the control centers is generated.

SF AC controller, upon transmission of AM control initiating command to PCM module via communication line *21* of SF IOB bus, implements control of the command transmitted to the AM by its reading via feedback from the output of PCL PLC *24* and comparing it with the preset command. If the command does not correspond to the preset command, then SF AC *2* (Figure 1) registers PCM module failure and transmits message about this via EN bus 5 to the upper level of the normal operation system control, and via interfaces IPI₁ to MCR and IPI₂ to ECR (Figure 2).

Figure 7 shows structure of SF AC automation controller using the example of channel 1 SF AC. Automation processor module SF APM *27* of SF AC controller receives via SF IOB bus *7* digital values of the process parameters from MCP modules of IOS₁₋ₙ stations of its safety channel, executes their processing, and in case of detecting emergency situation, in compliance with safety algorithms, generates and transmits via SF IOB bus 7 to PCM modules of PCS₁₋ₘ stations of its and other safety channels protective action control commands. While execution of safety algorithms, SF APM *27* executes data exchange with SF APM of safety channels 2, 3, and 4, respectively, via interprocessor interfaces IPI *6*₁₂, *6*₁₃, *6*₁₄, and executes majority processing of data from all safety channels according to '2 out of 4' principle. Via interfaces of communication of safety channel 1 SF APM with MCR - IPI₁ *11*₁₁, and with ECR - IPI₂ *11*₂₁, the processor module receives remote control commands from MCR and ECR and transmits to the MCR and ECR diagnostic information about execution of protection algorithms. Via redundant bus EN *5*₁, *5*₂ module SF APM transmits diagnostic information of the safety system to the normal operation system.

Reception of data from IOS stations and PCS stations, and transmission of commands and data to PCS stations the processor module SF APM executes: via lines of communication of I/O bus SF IOB *29*₁ - *29*ₚ with communication modules BM-4 *28*₁ - *28*ₚ, and further via communication lines *15* of BM-4 modules with IOS stations and via communication lines *19* with PCS stations. Each communication module BM-4 can be linked via 4 communication lines with 4 IOS stations of its own safety channel, for instance, IOS₁₋₄, or with 4 groups of 4 stations, for instance, PCS₁₋₄ of its own and the other 3 safety channels. Figure 7 shows, as an example, connections of BM-4 module *28*ₚ₋₁ of safety channel 1 to 4 stations IOS₁₋₄ of this channel, and connections of BM-4 module *28*₂ of safety channel 1 to a group of PCS₁₋₄ stations of this channel and to a group of PCS₁₋₄ stations in each of the other 3 safety channels.

Communication module BM-4 *28*ₚ₋₁ is linked via communication line *15*₁ with IOS₁, via communication line *15*₂ - with IOS₂, via communication line *15*₃ - with IOS₃, and via communication line *15*₄ - with IOS₄ of its own (1^{st}) safety channel.

Communication module BM-4 *28*₂ is connected via communication line *19*₁₁ to 4 stations PCS₁₋₄ of its own, i.e. 1^{st} safety channel, via the second communication line *19*₁₂ - to 4 stations PCS₁₋₄ of safety channel 2, via communication line *19*₁₃ - to 4 stations PCS₁₋₄ of safety channel 3, and via communication line *19*₁₄ - to 4 stations PCS₁₋₄ of safety channel 4. Communication modules BM-4 *28*₂ of SF AC controllers of the other 3 safety channels are similarly connected to these 4 groups of stations PCS₁₋₄.

## Claims

1. A control safety system for use in nuclear plants, comprising:
a plurality of identical safety channels, each said channel includes process signal input/output stations IOS₁₋ₙ, actuation mechanism priority control stations PCS₁₋ₘ that are connected with the main control room MCR and emergency control room ECR, safety features automation controller SF AC, safety features input/output bus SF IOB for SF AC controller data exchange with IOS and PCS stations, and is cross-connected with other safety channels by means of duplex optical fiber communication paths, **characterized in that the** said IOS station contains modules of communication with the process MCP₁₋ₖ and communication module - converter of communication interfaces CIC of SF IOB bus; said PCS station contains actuation mechanism priority control modules PCM₁₋ₑ and communication modules: voting communication module VCM and voting module VM of SF IOB bus; said automation controller SF AC contains safety feature automation processor module SF APM and communication modules - branching modules BM-4₁₋ₚ of SF IOB bus; said safety feature automation processor module SF APM of each safety channel is cross-connected with the SF APM of other safety channels by communication paths implemented using interprocessor interfaces IPI of 'point-to-point' type based on Ethernet interface and data-level communication protocol; said safety channel SF IOB bus has a 'tree'-type structure, the upper root node of which is the SF APM of the safety channel, the low end nodes are modules of communication with the process MCP₁₋ₖ of IOS₁₋ₙ stations and priority control modules PCM₁₋ₑ of PCS₁₋ₘ stations of its own safety channel, and priority control modules PCM₁₋ₑ of PCS₁₋ₘ stations of other safety channels, and intermediate nodes are communication modules: BM-4₁₋ₚ of automation controller, CIC of I/O stations, and VCM and VM of priority control stations; communication paths between the modules being in the SF IOB bus nodes are implemented as the lines of a serial duplex interface of 'point-to-point' type; interchannel communication lines between automation controller SF AC of each safety channel and priority control stations PCS₁₋ₑ of other safety channels are implemented using optical fiber cables; each safety channel is implemented based on one processor located in the automation processor module APM; and majority redundancy according to '2 out of N' principle of commands and data selection, where N is a number of safety channels, is implemented here at the two levels of interchannel communications: at the level of the processors of SF APM modules when receiving by the SF APM module processor of each safety channel the commands and measured parameters from the processors of the SF APM modules of other safety channels via interprocessor interfaces IPI, and at the level of priority control stations in communication modules VM of PCS₁₋ₘ stations, when receiving by PCS₁₋ₘ the control commands from the processors of the SF APM modules of all the safety channels via SF IOB buses; in said PCM modules of said PCS stations outputs of programmable logic circuits of actuation mechanisms priority control logic - PCL PLC - are connected to AM input and via feedback paths to SF AC controller of the safety channel via SF PLC and SF IOB bus; AM outputs are connected to PCL PLC and via SF PLC to MCR, ECR, and SF AC controllers; SF AC controllers of safety channels are connected with MCR and ECR via interprocessor interfaces IPI of 'point-to-point' type implemented based on Ethernet interface and data-level communication protocol; automation controllers SF AC of all safety channels are connected to the normal operation system via redundant bus EN built based on switched Ethernet interface, ring structure of net switch connection, and data-level communication protocol.

2. A control safety system for use in nuclear power plant according to claim 1, **characterized in that the** communication module CIC of SF IOB bus in IOS station of each safety channel is connected via separate SF IOB communication lines with automation controller SF AC of the safety channel and with each MCP₁₋ₖ module.

3. A control safety system for use in nuclear power plants according to claim 1, **characterized in that the** PCS stations in each safety channel are combined into groups of N stations, a number of PCS stations is determined by a number of safety channels, the first PCS₁ station of the group is connected via SF IOB communication line with SF AC controller of its safety channel, the other stations PCS_{2-N} of the group are connected with SF AC controllers of the other N-1 safety channels, communication module VCM of each PCS station is connected with communication module of voting according to '2 out of N' majority algorithm VM of its own PCS station and with communication modules VM of the other PCS stations of the group; communication module VM of each PCS station is connected via SF IOB communication lines with priority control modules PCM₁₋ₑ of this station.

## Patentansprüche

1. Das Sicherheitssteuerungssystem für ein Kernkraftwerk, bestehend aus:
Vielzahl von identen Sicherheitskanälen, jeder solcher Kanal umfasst Eingabe/Ausgabe-Stationen für technologische Signale IOS₁₋ₙ, Prioritätssteuerungsstationen von Ausführungsmechanismen PCS₁₋ₘ, verbunden mit der Blockschaltwarte MCR und Notschaltwarte ECR, einen Controller der Automatisierung von Sicherheitsmitteln SF AC, einen Eingabe/Ausgabe-Bus der Sicherheitsmittel SF IOB für den Datenaustausch zwischen dem Controller SF AC und Stationen IOS und PCS, und jeder Kanal ist mit anderen Sicherheitskanälen über Duplex-Glasfaser-Kommunikationsleitungen gekreuzt verbunden, **dadurch gezeichnet, dass** die genannte Station IOS die Module der Kommunikation mit der technologischen Einheit MCP₁₋ₖ und dem Kommunikationsmodul - Konverter der Kommunikationsschnittstellen CIC des Buses SF IOB umfasst; die genannte Station PCS umfasst die Prioritätssteuerungsmodule von Ausführungsmechanismen PCM₁₋ₑ, sowie Kommunikationsmodule: Voting-Kommunikationsmodul VCM und Voting-Modul VM des Buses SF IOB; der genannte Controller der Automatisierung SF AC umfasst das Modul des Prozessors der Automatisierung von Sicherheitsmitteln SF APM und Kommunikationsmodule - Verzweigungsmodule BM-4₁₋ₚ des Buses SF IOB; das genannte Modul des Prozessors der Automatisierung von Sicherheitsmitteln SF APM jedes Sicherheitskanals ist mit SF APM anderer Sicherheitskanäle über Kommunikationsleitungen, implementiert mit dem Einsatz der Duplex-Interprozessor-Schnittstellen IPI Typ "Punkt-zu-Punkt" auf Basis der Schnittstelle Ethernet und speziellen Kommunikationsprotokolls der Datenebenen, gekreuzt verbunden; der genannte Bus SF IOB des Sicherheitskanals hat die Baumstruktur, deren oberer Wurzelknoten SF APM des Sicherheitskanals ist, dessen untere Endknoten sind Kommunikationsmodule mit der technologischen Einheit MCP₁₋ₖ der Stationen IOS₁₋ₙ und Prioritätssteuerungsmodule PCM₁₋ₑ der Stationen PCS₁₋ₘ des eigenen Sicherheitskanals sowie Prioritätssteuerungsmodule PCM₁₋ₑ der Stationen PCS₁₋ₘ anderer Sicherheitskanäle; dessen Zwischenknoten sind Kommunikationsmodule: BM-4₁₋ₚ des Controllers der Automatisierung, Eingabe/Ausgabeeinheiten CIC, VCM und VM der Prioritätssteuerungsstationen; die Kommunikationswege zwischen den Modulen, die sich in den Knoten des Buses SF IOB befinden, sind als Leitungen der Duplex-Serienschnittstelle Typ "Punkt-zu-Punkt" implementiert; die Interkanalkommunikationsleitungen zwischen dem Controller der Automatisierung SF AC jedes Sicherheitskanals und den Prioritätssteuerungsstationen PCS₁₋ₘ anderer Sicherheitskanäle sind mit dem Einsatz von Glasfaserkabeln ausgeführt; jeder Sicherheitskanal ist realisiert auf Basis eines Prozessors, der sich im Modul des Prozessors der Automatisierung APM befindet, und mit der Majoritätsredundanz "2 von N" der Auswahl von Befehlen und Daten, wo N die Anzahl der Sicherheitskanäle ist; diese ist in der vorliegenden Erfindung auf zwei Ebenen der Interkanalkommunikation implementiert: auf der Ebene der Prozessoren von Modulen SF APM, wenn der Prozessor des Moduls SF APM jedes Sicherheitskanals die Befehle und gemessene Parameter von den Prozessoren der Module SF APM anderer Sicherheitskanäle über Interprozessor-Schnittstellen IPI erhält, und auf der Ebene der Prioritätssteuerungsstationen in den Kommunikationsmodulen VM der Stationen PCS₁₋ₘ, wenn PCS₁₋ₘ die Steuerungsbefehle von den Prozessoren der Module SF APM aller Sicherheitskanäle über die Busse SF IOB erhält; in den oben genannten Modulen PCM der oben genannten Stationen PCS sind die Ausgänge der programmierbaren logischen Schaltungen des Logik-Prozessors der Prioritätssteuerung von Ausfühmngsmechanismen PCL PLC mit dem Eingang von AM und über Rückkopplungsleitungen mit dem Controller SF AC des Sicherheitskanals über SF PLC und den Bus SF IOB verbunden; die Ausgänge von AM sind mit PCL PLC und über SF PLC mit MCR, ECR und Controllern SF AC verbunden; die Controller SF AC der Sicherheitskanäle sind über der Duplex-Interprozessor-Schnittstellen IPI Typ "Punkt-zu-Punkt", realisiert auf Basis der Schnittstelle Ethernet und speziellen Kommunikationsprotokolls der Datenebenen, mit MCR und ECR verbunden; die Controller SF AC aller Sicherheitskanäle sind mit dem Normalbetriebssystem über den redundanten Bus EN, aufgebaut auf der Basis der schaltbaren Schnittstelle Ethernet mit der Ringstruktur der schaltbaren Netzverbindung und speziellen Kommunikationsprotokolls der Datenebenen, verbunden.

2. Das Sicherheitssteuerungssystem für ein Kernkraftwerk nach dem Anspruch 1, **dadurch gekennzeichnet, dass** das Kommunikationsmodul CIC des Buses SF IOB in der Station IOS jedes Sicherheitskanals über separate Kommunikationsleitungen SF IOB mit dem Controller der Automatisierung SF AC des Sicherheitskanals und mit jedem Modul MCP₁₋ₖ verbunden ist.

3. Das Sicherheitssteuerungssystem für ein Kernkraftwerk nach dem Anspruch 1, **dadurch gekennzeichnet, dass** die Stationen PCS in jedem Sicherheitskanal in die Gruppen von N Stationen kombiniert werden; die Anzahl der PCS-Stationen ist durch die Anzahl der Sicherheitskanäle bestimmt; die erste Station der Gruppe PCS₁ ist über die Kommunikationsleitung SF IOB mit dem Controller SF AC ihres Sicherheitskanals verbunden, andere Stationen der Gruppe PCS₂₋ₙ sind mit Controllern SF AC anderer Sicherheitskanäle N-1 verbunden; das Kommunikationsmodul VCM jeder PCS-Station ist mit dem Voting-Kommunikationsmodul VM nach dem Majoritätsprinzip "2 von 4" eigener PCS-Station sowie mit den Kommunikationsmodulen VM anderer PCS-Stationen in der Gruppe verbunden; das Kommunikationsmodul VM jeder PCS-Station ist über Kommunikationsleitungen SF IOB mit den Prioritätssteuerungsmodulen PCM₁₋ₑ dieser Station verbunden.

## Revendications

1. Système de commande de sécurité des centrales nucléaires qui comprend :
plusieurs canaux de sécurité identiques, chaque canal pareil inclut les modules d'entrée/de sortie des signaux technologiques IOS₁₋ₙ, modules de commande de la priorité des mécanismes exécutifs des signaux technologiques PCS₁₋ₘ branchés au panneau de commande en blocs et au panneau de commande de réserve, contrôleur de l'automatisation des fonctions de sécurité SF AC, bus d'entrée/de sortie des signaux des fonctions de sécurité SF IOB pour l'échange en données du contrôleur SF AC avec les modules IOS et PCS, et chaque canal est branché de façon croisée aux autres canaux de sécurité par les tracés de communication bilatérale à fibres optiques, **avec une originalité qui consiste en ce que** le module susmentionné IOS contient les modules de communication avec le bloc technologique MCP₁₋ₖ et avec le module de communication - adaptateur depuis les interfaces de communication CIC du bus SF IOB ; le module susmentionné PCS contient les modules de commande de la priorité des mécanismes exécutifs PCM₁₋ₑ, aussi bien que les modules tels que : module de communication votant VCM et module votant VM du bus SF IOB ; le contrôleur de l'automatisation susmentionné SF AC comprend le module du processeur de l'automatisation de la fonction de sécurité SF APM et les modules de communication - modules de distribution BM-4₁₋ₚ du bus SF IOB ; le module susdit du processeur de l'automatisation des fonctions de sécurité SF APM de chaque canal de sécurité est branché de façon croisée à SF APM des canaux de sécurité restants par les lignes de communication réalisées avec utilisation des interfaces bilatérales entre processeurs IPI type « point-to-point » à partir de l'interface Ethernet et du protocole de communication spécialisé d'après le niveau des données ; le bus susdit SF IOB du canal de sécurité a le schéma en arbre dont le nœud radical supérieur - SF APM du canal de sécurité, le nœud final inférieur est représenté par les modules de communication avec le bloc technologique MCP₁₋ₖ des modules IOS_{1-N} et par les modules de commande de la priorité PCM₁₋ₑ des modules PCS₁₋ₘ de son propre canal de sécurité, et par les modules de commande de la priorité PCM₁₋ₑ des modules PCS_{1 -m} des canaux de sécurité restants, tandis que les nœuds intermédiaires représentent les modules de communication : BM-4₁₋ₚ du contrôleur de l'automatisation, CIC des modules d'entrée/de sortie, VCM et VM des modules de commande de la priorité ; les tracés de communication entre les modules placés dans les nœuds du bus SF IOB sont réalisés en forme de lignes de l'interface bilatérale consécutive type « point-to-point » ; les lignes de communication entre voies entre le contrôleur de l'automatisation SF AC de chaque canal de sécurité et les modules de commande de la priorité PCS₁₋ₑ des canaux de sécurité restants sont réalisées avec utilisation des câbles à fibres optiques ; chaque canal de sécurité est réalisé à partir d'un seul processeur placé dans le module du processeur de l'automatisation APM ; et avec la réservation suivant le principe de majorité « 2 de N » de sélection des commandes et des données où N est la quantité de canaux de sécurité, dans la présente invention cela est réalisé à deux niveaux de communication entre voies : au niveau des processeurs des modules SF APM pendant la réception des processeurs du module SF APM de chaque canal de sécurité des commandes et des paramètres mesurés depuis les processeurs des modules SF APM des canaux de sécurité par les interfaces entre processeurs IPI, et au niveau des modules de commande de la priorité dans les modules de communication VM des modules PCS₁₋ₘ lors de réception par PCS₁₋ₘ des ordres de commande depuis les processeurs des modules SF APM de tous les canaux de sécurité par les bus SF IOB ; dans les modules PCM susmentionnés des modules PCS susmentionnés les sorties des schémas logiques programmables du module logistique de commande de la priorité des mécanismes exécutifs - PCL PLC - sont branchées à l'entrée des mécanismes exécutifs et par les tracés de communication en retour avec le contrôleur SF AC du canal de sécurité SF PLC et du bus SF IOB ; les sorties des mécanismes exécutifs sont branchées à PCL PLC et par SF PLC au panneau de commande en blocs, au panneau de commande de réserve et aux contrôleurs SF AC ; les contrôleurs SF AC des canaux de sécurité sont branchés au panneau de commande en blocs et au panneau de commande de réserve par les interfaces bilatérales entre processeurs IPI type « point-to-point » réalisés à partir de l'interface Ethernet et du protocole de communication spécialisé d'après le niveau des données ; les contrôleurs de l'automatisation SF AC de tous les canaux de sécurité sont branchés au système d'exploitation normale par le bus de réserve EN construit à partir de l'interface Ethernet commutable, au schéma circulaire de la connexion réseautique commutable et au protocole des données spécialisé d'après le niveau des données.

2. Le système de commande de sécurité des centrales nucléaires conformément au point de la demande 1 **est caractérisé par ce que** le module de communication CIC du bus SF IOB dans le module IOS de chaque canal de sécurité est branché par les lignes de communication séparées SF IOB au contrôleur de l'automatisation SF AC du canal de sécurité et à chaque module MCP₁₋ₖ.

3. Le système de commande de sécurité des centrales nucléaires conformément au point de la demande 1 **est caractérisé par ce que** les modules PCS dans chaque canal de sécurité sont réunis en groupes, chaque groupe contient N modules ; la quantité de modules PCS se détermine par la quantité de canaux de sécurité ; le premier module du groupe PCS₁ est branché par la ligne de communication SF IOB au contrôleur SF AC de son canal de sécurité ; les modules restants du groupe PCS_{2-N} sont branchés aux contrôleurs SF AC des autres canaux de sécurité N-1 ; le module de communication VCM de chaque module PCS est branché au module de communication votant suivant le principe de majorité « 2 de N » VM de son propre module PCS, aussi bien que par les modules de communication VM des modules PCS restants dans le groupe ; le module de communication VM de chaque module PCS est branché par les lignes de communication SF IOB aux modules de commande de la priorité PCM₁₋ₑ de ce module.
